# FASCICULE DE BREVET EUROPEEN

(11) **EP 1 486 047 B1**
(45) Date de publication et mention de la délivrance du brevet: **20.08.2008**
(21) Numéro de dépôt: 03725276.4
(22) Date de dépôt: 07.03.2003
(51) Int. Cl.: H04L 29/06

(54) **PROCEDE DE SELECTION ET DE TRI DE PAQUETS DE DONNEES**
VERFAHREN ZUR AUSWAHL UND SORTIERUNG VON DATENPAKETEN
METHOD OF SELECTING AND SORTING DATA PACKETS

(30) Priorité: 15.03.2002 FR 0203257
(43) Date de publication de la demande: 15.12.2004
(73) Titulaire: Thales, 75008 Paris (FR)
(72) Inventeur: COLAS, Gérard, Thales Intellectual Property, 94117 Arcueil cedex (FR); PITOT, Christian, Thales Intellectual Property, 94117 Arcueil Cedex (FR)
(74) Mandataire: Beylot, Jacques
(86) Numéro de dépôt international: PCT/FR2003/000745
(87) Numéro de publication internationale: WO 2003/079632

(56) Documents cités:
- EP-A- 0 993 153
- WO-A-02/15521
- KUMAR V P ET AL: "BEYOND BEST EFFORT: ROUTER ARCHITECTURES FOR THE DIFFERENTIATED SERVICES OF TOMORROW'S INTERNET" IEEE COMMUNICATIONS MAGAZINE, IEEE SERVICE CENTER. PISCATAWAY, N.J, US, vol. 36, no. 5, 1 mai 1998 (1998-05-01), pages 152-164, XP000752860 ISSN: 0163-6804
- GUPTA P ET AL: "PACKET CLASSIFICATION ON MULTIPLE FIELDS" COMPUTER COMMUNICATIONS REVIEW, ASSOCIATION FOR COMPUTING MACHINERY. NEW YORK, US, vol. 29, no. 4, octobre 1999 (1999-10), pages 147-160, XP000852195 ISSN: 0146-4833

## Description

La présente invention est relative au traitement des messages échangés entre équipements par l'intermédiaire d'un ou plusieurs réseaux de transmission de données par paquets. Elle concerne plus particulièrement, le filtrage, par un équipement, de l'ensemble des paquets mis à sa disposition par le ou les réseaux de transmission de données par paquets pour ne retenir que ceux appartenant à des messages dont l'équipement est destinataire et les diriger, dans l'équipement, vers un port de réception adéquat.

Les paquets modulent les signaux de transmission acheminés par le milieu physique de transmission utilisé par un réseau. Ils sont constitués de datagrammes ou suites plus ou moins longues d'éléments binaires séparés en différents champs successifs dont un champ de données utiles encapsulant un message ou une partie de message constituant la charge marchande du réseau et des champs d'informations de service permettant de router le paquet au sein du réseau et de préciser certaines caractéristiques du champ de données utiles pour faciliter son exploitation en sortie du réseau. Le format d'un paquet, c'est-à-dire la décomposition en champs, du datagramme qui le constitue, répond à des règles précises connues des participants au réseau et regroupées sous le terme de protocole de couche physique ou encore protocole de premier niveau.

La charge marchande du réseau occupant le champ de données utiles d'un paquet constitue elle-même un datagramme. Elle peut être organisée, à son tour, en différents champs successifs dont un champ de données utiles et des champs d'informations de services intéressant le routage de la charge marchande du réseau, au-delà du réseau lui-même, au sein d'un équipement raccordé. Son format répond également à des règles précises regroupées sous le terme de protocole de couche logique. On est alors en présence de deux couches de protocole à exploiter pour déterminer l'adresse complète de destination d'un paquet et en extraire les données utiles. Il peut même arriver que la couche logique soit subdivisée et que l'on soit en présence de plus de deux couches de protocole, l'adresse de destination du paquet étant précisée de couche de protocole en couche de protocole.

Parmi les réseaux de transmission de données par paquets concernés par l'invention, on peut citer les réseaux Ethernet utilisant, au premier niveau de la couche physique de transmission, un format de paquet ou trame répondant à un protocole "MAC (acronyme de l'anglo-saxon "Media Access Control"), défini dans les normes 802.3 et/ou 802.2 établies par l'Institute of Electrical and Electronics Engineers.

Dans un paquet répondant au protocole MAC IEEE 802.3/802.2, il y a un champ de données utiles dit "champ de données Ethernet" et différents champs d'informations de service notamment, un dit "MAC Destination Address" et un autre dit "LLC" (acronyme de l'anglo-saxon "Logical Link Control") ou encore :"LPDU" (acronyme de l'anglo-saxon "Logical Protocol Data Unit"). Le champ d 'informations de service MAC Destination Address identifie sur le réseau, le ou les équipements destinataires du paquet. Le champ d'informations de service LLC/LPDU renferme différentes informations sur le deuxième niveau correspondant à la couche immédiatement supérieure à la couche physique, dont l'identité du protocole utilisé pour le formatage du champ de données Ethernet.

Le protocole dit de deuxième niveau, utilisé pour le formatage d'un champ de données Ethernet peut être, soit un protocole propriétaire, spécifique aux équipements émetteur et récepteur mis en relation par le réseau de transmission de données Ethernet, soit un protocole standardisé, à plus large audience. Les protocoles standardisés utilisés le plus couramment pour le formatage d'un champ de données Ethernet sont les protocoles Internet répondant aux normes RFC émises par le DARPA (acronyme de l'anglo-saxon "Defense Advenced Research Project Agency") et, parmi ceux-ci, le protocole IP (acronyme de l'anglo-saxon "Internet Protocol") qui peut être utilisé seul ou en combinaison avec un troisième niveau de protocole tel le protocole TCP (acronyme de l'anglo-saxon "Transport Control Protocol"), le protocole UDP, (acronyme de l'anglo-saxon "User Datagram Protocol") ou encore le protocole ICMP (acronyme de l'anglo-saxon "Internet Control Message Protocol").

L'accès d'un équipement à un réseau de transmission de données se fait par l'intermédiaire d'un milieu physique assurant la propagation des signaux de transmission au sein du réseau, souvent le milieu ambiant ou un câble électrique ou optique, d'une fonction émission-réception souvent référencée sous l'intitulé anglo-saxon de "Medium Dependant Interface and Physical Layer Device" et d'une fonction souvent référencée sous l'intitulé anglo-saxon de "Data Terminal Equipment".

La fonction émission-réception consiste, dans le sens de la réception, à recevoir les signaux du milieu de propagation et en extraire leur contenu binaire.

La fonction DTE consiste, dans le sens de la réception, à exploiter le contenu binaire des signaux reçus du réseau par l'entremise de la fonction émission-réception pour en extraire les messages intéressant l'équipement concerné et les diriger au sein de l'équipement, vers le ou les ports de réception adéquats.

Lorsque le réseau de transmission de données est de type à transmission par paquets, chaque signal empruntant le milieu de transmission transporte un paquet de données. La reconnaissance, dans les signaux parvenant du milieu de propagation, d'un paquet de données est du ressort de la fonction émission-réception qui a, à sa charge, outre l'extraction du contenu binaire des signaux reçus du réseau, la détection du début et de la fin de chaque paquet reçu.

La fonction DTE assure le stockage temporaire du flux de données binaire provenant de la fonction émission-réception entre la détection par cette dernière d'un début et d'une fin de paquet, le temps d'exploiter l'adresse de destination figurant dans les informations de service contenues dans le paquet pour, soit si le paquet intéresse l'équipement concerné, le sélectionner et diriger les données utiles qu'il renferme vers un ou plusieurs ports de réception de l'équipement concerné, soit si le paquet n'intéresse pas l'équipement concerné, le rejeter. Très souvent, la fonction DTE vérifie en outre l'intégrité des données contenues dans un paquet sélectionné.

La fonction émission-réception, qui est très dépendante des propriétés physiques du milieu de transmission, est, en général, confiée à un ou des circuits spécialisés placés au niveau d'une carte d'interface réseau montée dans l'équipement à raccorder au réseau tandis que la fonction DTE qui ne met en oeuvre que des opérations logiques sur des données binaires peut, soit faire l'objet d'une tâche accessoire confiée à un calculateur effectuant d'autres tâches dévolues à l'équipement raccordé au réseau, soit être confiée à un automate spécialisé à microprocesseur placé sur la carte d'interface réseau, au côté des circuits spécialisés assurant la fonction émission-réception.

Lorsque les paquets mis à disposition de l'équipement par le ou les réseaux de transmission peuvent faire l'objet de plusieurs couches de protocole avec une adresse de destination répartie entre les champs d'informations de service de ces différentes couches de protocole, la fonction DTE doit, pour chaque paquet mis à disposition, détecter les différentes couches de protocoles et les exploiter pour en extraire l'adresse de destination finale du paquet, puis comparer cette adresse de destination finale avec celles des différents ports de réception de l'équipement concerné pour ne retenir le paquet que lorsqu'il y a concordance de son adresse de destination finale avec une ou plusieurs adresses de ports de réception de l'équipement concerné.

Pour réaliser ces opérations de routage sur chaque paquet mis à disposition, il est habituel, pour une fonction DTE d'opérer en deux étapes : une première étape de détermination de l'adresse finale de destination du paquet par détection de ses différentes couches de protocole et analyse des champs d'informations de service concernés par l'adresse finale de destination du paquet dans les différentes couches de protocole détectées, et, une deuxième étape de recherche des concordances de l'adresse finale de destination lue dans le paquet avec les adresses des différents ports de réception de l'équipement rassemblées dans un annuaire d'adresses finales spécifique à l'équipement.

Habituellement, la recherche de concordance entre l'adresse du destinataire figurant dans les informations de service du paquet et l'adresse réseau de l'équipement concerné, et les adresses équipement des ports de réception de cet équipement se fait, soit, par étapes, de manière progressive, soit globalement.

Un exemple de méthode progressive de recherche de concordance entre l'adresse finale de destination d'un paquet et les adresses d'un équipement ayant accès à un ou plusieurs réseaux de transmission employant au moins deux couches de protocoles est décrit dans la demande internationale de brevet WO 02/15521. Celle-ci fait appel à une hiérarchie d'annuaires associée à des règles évitant les retours en arrière coûteux en temps de traitement.

Le désir de diversification des réseaux de transmission de données, de standardisation des interfaces d'accès à ces réseaux et d'augmentation de la variété des messages échangés entre équipements raccordés conduit à exiger de la fonction DTE une prise en compte de paquets de natures de plus en plus variées, pouvant mettre en oeuvre divers protocoles de deuxième niveau et de troisième niveau ainsi qu'une prise en compte, pour un équipement, de ports de réception en plus grand nombre adaptés à la variété des messages. Il s'ensuit un accroissement de la complexité d'une opération de lecture d'une adresse de destination finale de paquet en raison de la multiplicité des protocoles à prendre en considération et une augmentation de la complexité de l'opération de recherche de concordance au niveau de l'annuaire d'adresses, par suite d'une augmentation de la longueur des adresses de destination finale de paquet et des adresses complètes de ports de réception imposée par la diversité des protocoles à traiter, et par suite d'une augmentation du nombre d'adresses stocké dans l'annuaire d'adresses finales, consécutive à l'accroissement du nombre de ports de réception d'un équipement.

Pour composer avec l'augmentation du délai de traitement des adresses de paquets de différentes natures, il a été proposé, notamment dans la demande européenne de brevet EP 0 993 153, dans l'article de Kumar V. P. et al intitulé " Beyond Best effort: Router Architectures for the Differentiated Services of Tomorrow's Internet" paru dans IEEE Communications Magazine, May 1998 p. 152-164, XP000752860, ISSN: 0163-6804 et dans l'article de Gupta P. et al intitulé "Packet Classification on Multiple Field"paru dans Computer Communications Review, vol. 29, n°4, octobre 1999, p. 147-160, XP000852195, ISSN: 0146-4833, d'affecter aux paquets un degré de priorité fonction de leur nature spécifique et d'effectuer un pré-tri des paquets en fonction de leurs degrés de priorité avant de procéder à une opération de routage. Cela permet de moduler la qualité de service en fonction de la nature des paquets et conduit à un éclatement de la recherche de concordance en plusieurs sous-recherches de moindre importance, sans pour autant diminuer la puissance de calcul nécessaire au routage.

De plus, dans les applications temps réel embarquées, des contraintes de qualité de service et de garantie d'acheminement des messages vers les ports de réception dans un délai borné interdisent la création de latence en cas de saturation du réseau par un grand nombre de paquets de petite taille. Ceci impose à la fonction DTE de pouvoir traiter un paquet sur chaque voie entrante dans le temps nécessaire à la réception du paquet de taille minimale.

Tout cela concourt à une augmentation des capacités de calcul demandées à l'équipement raccordé ou à son interface d'accès au réseau pour la fonction DTE, accroissement qui est encore amplifié par l'augmentation constante des débits des réseaux.

Il y a donc un besoin de procédés permettant de remplir une fonction DTE avec un minimum de capacité de calcul.

La présente invention a pour but de répondre à ce besoin.

Elle a pour objet un procédé de sélection et de tri de paquets de données mis à disposition de cet équipement, par au moins un réseau de transmission de données par paquets employant un format de paquets pouvant répondre à trois niveaux de protocoles :
- un protocole de premier niveau correspondant à une couche physique de transmission de réseau, régissant le format général d'un paquet et imposant la présence dans un paquet, d'une part, d'un champ de données utiles dit de premier niveau et, d'autre part, de champs d'informations de service dits de premier niveau dont un dit adresse destinataire couche physique, affecté à une première adresse de destinataire et un autre affecté à un identifiant de protocole de deuxième niveau,
- un protocole de deuxième niveau régissant le format du champ de données utiles de premier niveau et pouvant imposer une partition du champ de données utiles de premier niveau en un champ de données utiles dit de deuxième niveau et en des champs d'informations de service dits de deuxième niveau dont un, dit adresse destinataire de deuxième niveau, est affecté à une deuxième adresse de destinataire, et un autre affecté à un identifiant de protocole de troisième niveau, et
- un protocole de troisième niveau régissant le format du champ de données utiles de deuxième niveau et pouvant imposer une partition du champ de données utiles de deuxième niveau en un champ de données utiles dit de troisième niveau et en des champs de données de service dont certains peuvent n'exister que dans le premier des fragments véhiculant la charge marchande du protocole de second niveau.

Ce procédé est remarquable en ce qu'il consiste à :
- constituer un annuaire d'adresses dit de niveaux inférieurs rassemblant, sous forme d'une liste d'éléments, les différentes valeurs prises par les informations d'adressage apparaissant dans les champs d'informations de service des protocoles des premier et deuxième niveaux lorsqu'elles concernent l'équipement,
- constituer un annuaire d'adresses dit de niveaux supérieurs rassemblant, sous forme d'une liste d'éléments, les différentes valeurs prises par les informations d'adressage apparaissant dans les champs d'informations de service des protocoles de niveaux supérieurs au deuxième niveau lorsqu'elles concernent l'équipement,
- établir, pour chaque élément de la liste de l'annuaire d'adresses de niveaux inférieurs, un lien de compatibilité avec un ou plusieurs éléments de la liste de l'annuaire d'adresses de niveaux supérieurs, ce lien de compatibilité signalant la possibilité, pour deux éléments liés de se retrouver simultanément dans les champs d'informations de service d'un même paquet,
- établir pour chaque élément de la liste de l'annuaire d'adresses de niveaux supérieurs, un lien d'affectation à au moins un port de réception de l'équipement, et
pour chaque paquet mis à disposition de l'équipement par les réseaux de transmission de données :
- lire les informations d'adressage contenues dans les champs d'informations de service des protocoles des premier et deuxième niveaux,
- rechercher une concordance entre les informations d'adressage lues dans les champs d'informations de service des protocoles des premier et deuxième niveaux et un élément de la liste de l'annuaire d'adresses de niveaux inférieurs,
en l'absence d'élément concordant,
- rejeter le paquet,
en présence d'un élément concordant,
- prendre en considération le lien de compatibilité de l'élément concordant pour rechercher dans la liste des éléments de l'annuaire d'adressage des niveaux supérieurs, les éléments compatibles
- lire les informations d'adressage contenues dans les champs d'informations de service des protocoles de niveaux supérieurs au deuxième,
lorsque des informations d'adressage contenues dans les champs d'informations de service des protocoles de niveaux supérieurs au deuxième sont présentes,
- rechercher une concordance entre ces informations et un des éléments compatibles de la liste de l'annuaire d'adresses de niveaux supérieurs,
en l'absence d'éléments concordant,
- rejeter le paquet,
en présence d'un élément concordant,
- sélectionner le paquet mis à disposition,
- prendre en considération le lien d'affectation de l'élément concordant,
- adresser les données utiles du paquet aux ports de réception de l'équipement désignés par le lien d'affectation, et
- créer, s'il n'existe pas déjà, un descripteur de message alloué établissant une relation entre les ports de réception désignés par le lien d'affectation, le lien de compatibilité et la valeur d'un éventuel champ d'information de service de second niveau affecté à une identification de fragment de message pour permettre de réconcilier ultérieurement, les fragments entrants ne possédant pas d'informations d'adressage contenues dans les champs d'informations de service des protocoles de niveaux supérieurs au deuxième,
lorsque des informations d'adressage contenues dans les champs d'informations de service des protocoles de niveaux supérieurs au deuxième ne sont pas présentes,
- rechercher parmi les descripteurs de messages alloués ouverts une concordance au niveau du lien de compatibilité et de la valeur d'un éventuel champ d'information de service de second niveau affecté à une identification de fragment de message,
en l'absence d'éléments concordant,
- rejeter le paquet,
en présence d'un élément concordant,
- sélectionner le paquet mis à disposition,
- prendre en considération le lien d'affectation de l'élément concordant,
- adresser les données utiles du paquet aux ports de réception de l'équipement désignés par le lien d'affectation, et
rechercher dans les champs d'informations de service du second niveau du paquet une information de fin de message
permettant de mettre un terme au descripteur de message alloué considéré.

Avantageusement, les recherches de concordance sont faites, au sein des listes d'éléments des l'annuaires d'adresses de niveaux inférieurs et de niveaux supérieur, en suivant une méthode dichotomique dans des listes préalablement ordonnées, ce qui permet de garantir un temps de recherche minimal et borné.

Avantageusement, les éléments de l'annuaire d'adresses de niveaux inférieurs sont stockés dans une première table, leurs adresses au sein de cette table identifiant les liens de compatibilité qui leurs sont associés.

Avantageusement, les éléments de l'annuaire d'adresses de niveaux supérieurs sont stockés au sein d'une deuxième table, chacun d'eux étant associé, au sein de cette deuxième table, à un lien de compatibilité et à un lien d'affectation.

Avantageusement, lorsque la réception de paquets se fait sur plusieurs voies redondantes, la recherche d'un descripteur de message alloué se fait sur toutes les voies pour tenir compte du fait que le paquet initial ayant provoqué la création du descripteur de message alloué peut avoir été reçu préalablement sur une autre voie.

Avantageusement, lorsque le réseau est un réseau Ethernet avec des paquets respectant un protocole de premier niveau de type MAC et un protocole de deuxième niveau de type IP, chaque élément de l'annuaire d'adresses de niveaux inférieurs renferme au moins une valeur particulière du champ d'adresse destinataire MAC et une valeur particulière du champ d'adresse destinataire IP.

Avantageusement, lorsque le réseau est un réseau Ethemet avec des paquets respectant un protocole de premier niveau de type MAC imposant, parmi les champs de service d'un paquet, un champ identifiant les protocoles respectés par les paquets aux niveaux supérieurs et un protocole de deuxième niveau de type IP, chaque élément de l'annuaire d'adresses de niveaux inférieurs renferme au moins une valeur particulière du champ d'adresse destinataire MAC, une valeur particulière du champ d'adresse destinataire IP et un drapeau d'invalidation de la valeur particulière du champ adresse destinataire IP en cas de non reconnaissance d'un protocole de deuxième niveau type IP.

Avantageusement, lorsque le réseau est un réseau dupliqué constitué de deux réseaux Ethemet indépendants ayant chacun un accès à l'équipement, chacun des deux réseaux Ethernet ayant des paquets respectant un protocole de premier niveau de type MAC et un protocole de deuxième niveau de type IP, et lorsque l'équipement est en mesure d'identifier le ou les réseaux de provenance du paquet, chaque élément de l'annuaire d'adresses de niveaux inférieurs renferme au moins une valeur particulière du champ d'adresse destinataire MAC, une valeur particulière du champ d'adresse destinataire IP, un identifiant du ou des réseaux de provenance du paquet compatible avec ces valeurs particulières de champ d'adresse destinataire MAC et IP, et un drapeau de validation de l'identifiant du ou des réseaux de provenance.

Avantageusement, lorsque les paquets du réseau respectent un protocole de premier niveau de type MAC imposant, parmi les champs de service d'un paquet, un champ identifiant les protocoles respectés par les paquets au deuxième niveau, un protocole de deuxième niveau de type IP et un protocole de troisième niveau appartenant à un groupe de protocoles contenant les protocoles UDP et TCP, chaque élément de l'annuaire de niveaux supérieurs renferme au moins une valeur particulière de champ d'adresse UDP/TCP de port destinataire et un double drapeau de validation de la valeur particulière de champ d'adresse UDP/TCP de port destinataire identifiant, par la même occasion, un protocole de troisième niveau compatible avec la valeur particulière de champ d'adresse UDP/TCP de port destinataire.

Avantageusement, lorsque le réseau est un réseau dupliqué constitué de deux réseaux Ethemet indépendants ayant chacun un accès à l'équipement, chacun des deux réseaux Ethemet ayant des paquets respectant un protocole de premier niveau de type MAC, un protocole de deuxième niveau de type IP et un protocole de troisième niveau appartenant à un groupe de protocoles contenant les protocoles UDP et TCP, et lorsque l'équipement est en mesure d'identifier le ou les réseaux de provenance du paquet, chaque élément de l'annuaire de niveaux supérieurs renferme au moins une valeur particulière de champ d'adresse UDP/TCP de port destinataire, un double drapeau de validation de la valeur particulière du champ d'adresse UDP/TCP de port destinataire identifiant, par la même occasion, un protocole de troisième niveau compatible avec la valeur particulière de champ d'adresse UDP/TCP de port destinataire, un identifiant du ou des réseaux de provenance du paquet compatibles avec cette valeur particulière de champ d'adresse UDP/TCP de port destinataire, et un drapeau de validation de l'identifiant du ou des réseaux de provenance.

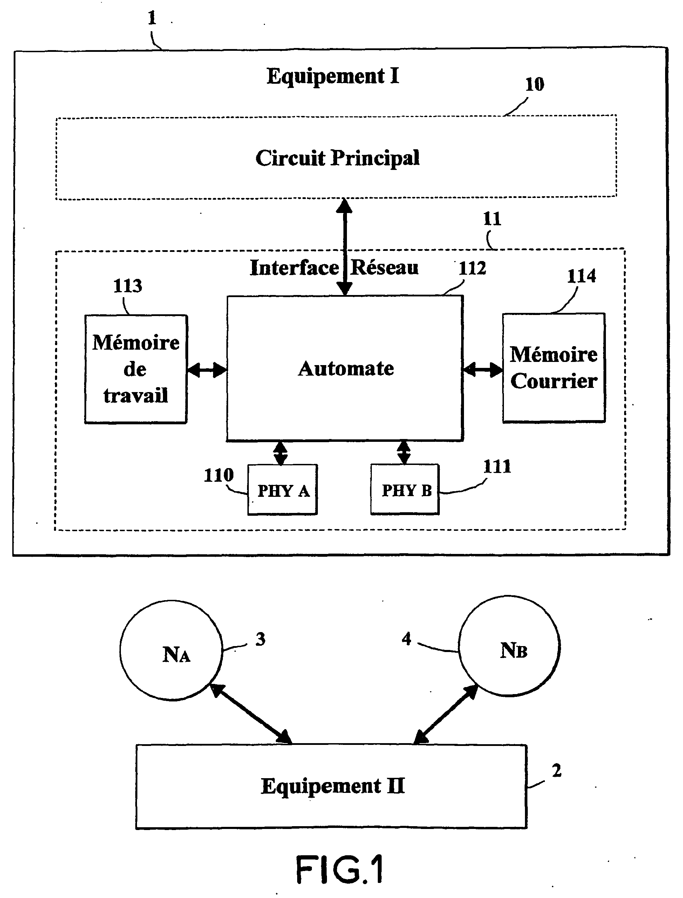

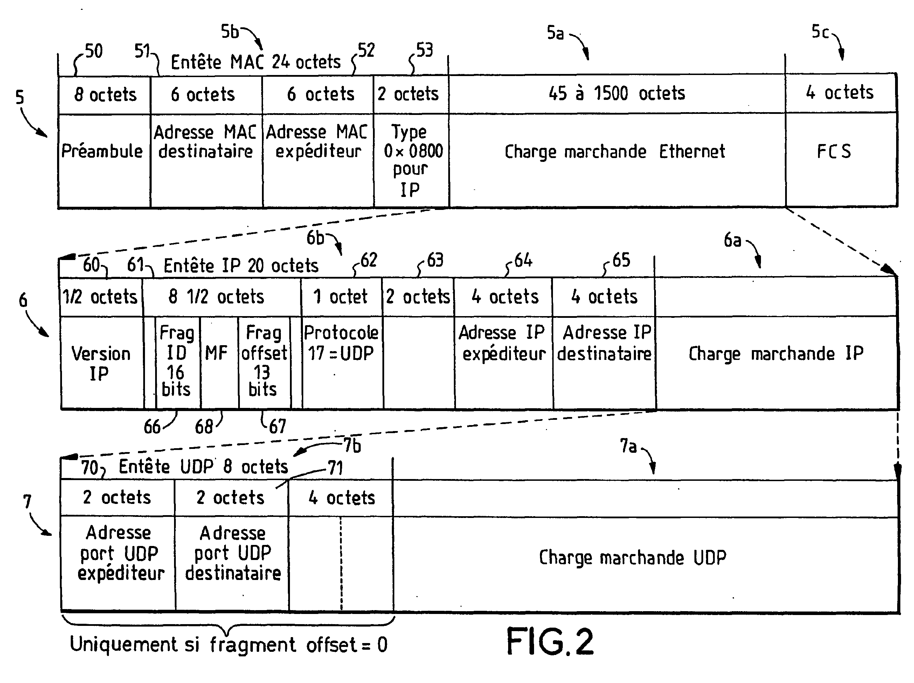

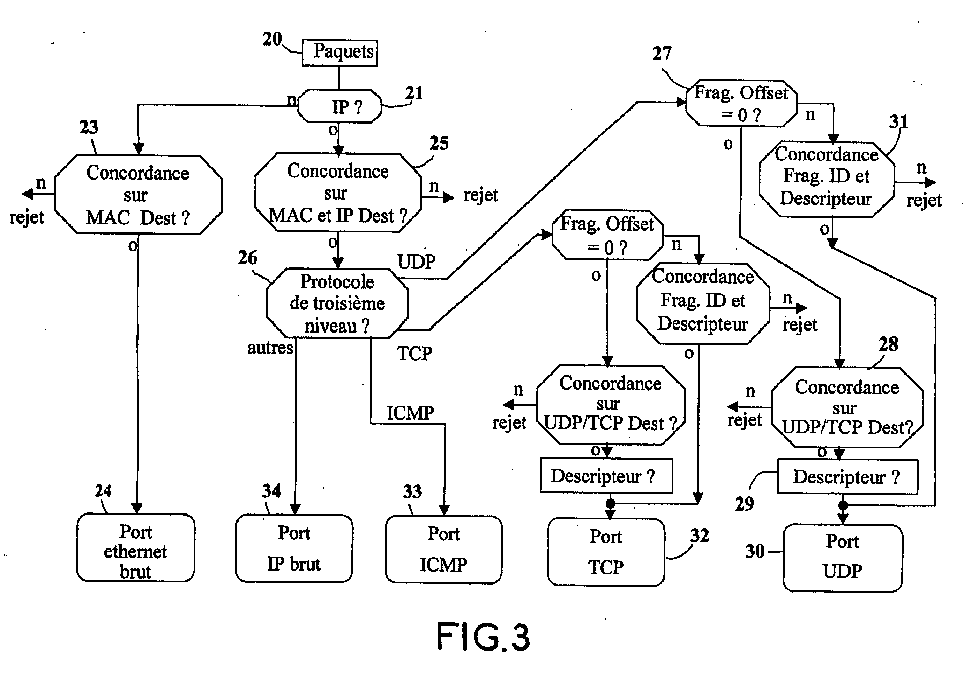

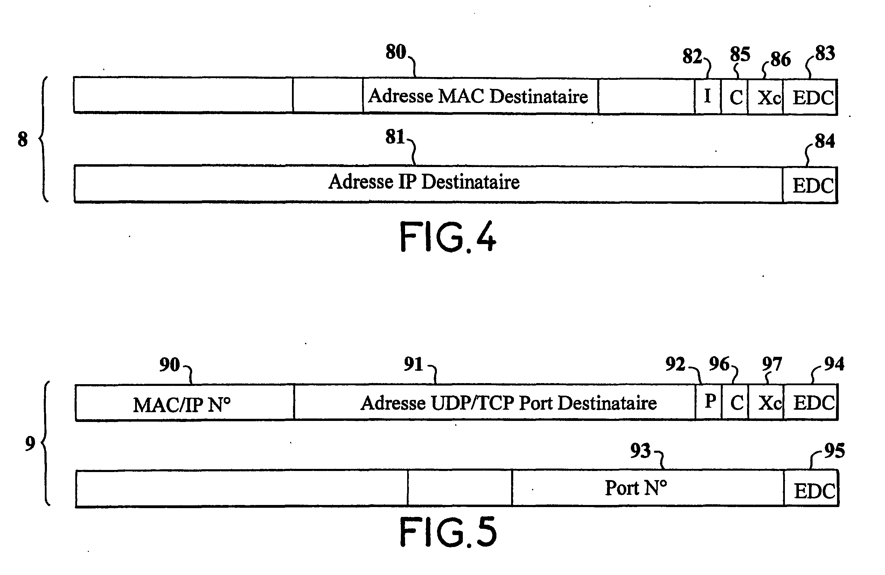

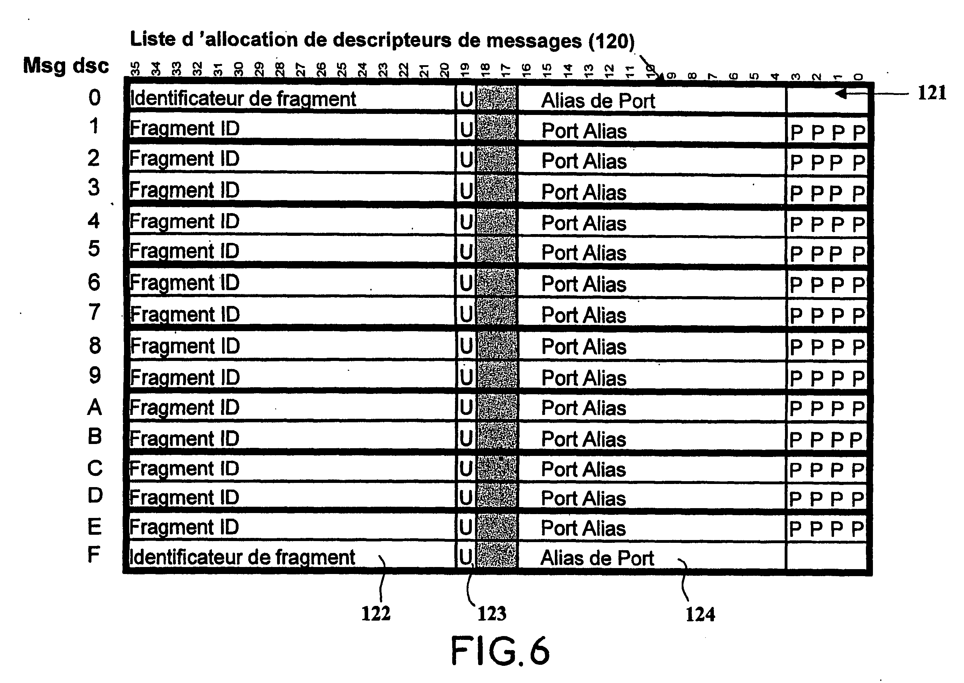

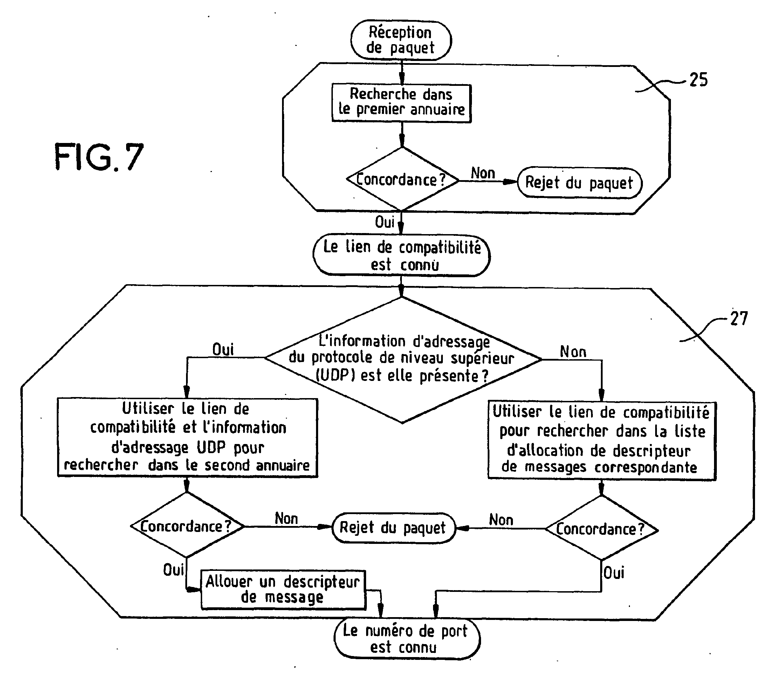

D'autres caractéristiques et avantages de l'invention ressortiront de la description ci-après d'un mode de réalisation donné à titre d'exemple. Cette description sera faite en regard du dessin dans lequel :
- une figure 1 est un schéma montrant deux équipements communiquant entre eux par l'intermédiaire de deux réseaux de transmission de données distincts, l'un des équipements ayant sa structure plus détaillée pour faire apparaître la constitution de ses accès aux réseaux,
- une figure 2 détaille un format de paquet utilisé par les réseaux de transmission de données montrés à la figure 1,
- une figure 3 est un diagramme illustrant une décomposition possible, en étapes élémentaires, des opérations de sélection et de tri qui doivent être menées par un équipement parmi les informations passant à sa portée, au niveau de ses accès à des réseaux de transmission,
- des figures 4 et 5 montrent les compositions des éléments de deux annuaires d'adresses, l'un dit de niveaux inférieurs et l'autre dit de niveaux supérieurs, utilisés pour des recherches de concordance lors des opérations de sélection et de tri dont le déroulement est illustré à la figure 3,
- une figure 6 représente une liste d'allocation de descripteurs de message associé à un lien de compatibilité donné permettant la réconciliation de l'identificateur de fragment avec le numéro de port de réception, et
- une figure 7 est un diagramme illustrant la succession des étapes de sélection et de tri de paquets dans le cas d'un protocole de rang supérieur de type UDP et pour une réception non redondante

Sur la figure 1, deux équipements I, II indexés par 1, 2 sont plus ou moins éloignés et communiquent entre eux travers de deux réseaux de transmission distincts Na, Nb indexés par 3, 4. Chaque équipement 1, 2 est pourvu d'un circuit principal 10 exécutant les tâches fondamentales pour lesquelles il a été conçu et d'un interface réseau 11 contrôlant les accès du circuit principal 10 de l'équipement aux deux réseaux de transmission Na, Nb 3,4.

Dans le sens réception, qui sera le seul décrit par la suite, l'interface réseau 11 a les tâches de détecter les messages parvenant aux accès réseaux de l'équipement 1, de sélectionner, parmi les messages détectés sur les accès réseaux, ceux intéressant réellement l'équipement et de trier les messages sélectionnés en fonction de leurs natures afin de les présenter de manière ordonnée au circuit principal 10 de l'équipement 1.

La détection des messages, au niveau des accès aux réseaux 3, 4 sur les milieux physiques de propagation utilisés par les réseaux 3, 4 et leurs mises sous forme binaire est le fait de circuits analogiques de réception PHY A, PHY B indexés par 110, 111 dont la composition est très dépendante des caractéristiques des milieux de propagation des réseaux. La sélection, parmi les messages détectés sur les accès de l'équipement 1 aux réseaux de transmission 3, 4 et mis sous forme binaire par les circuits analogiques de réception 110, 111 de messages intéressants l'équipement 1 ainsi que leur tri en fonction de leur nature, mettent en oeuvre des traitements purement logiques de types séquentiel et/ou combinatoire, qui peuvent être réalisés, comme représenté, à l'aide d'un automate logique à microprocesseur 112 mettant à contribution une mémoire vive de travail 113 et une mémoire vive de courrier 114. La mémoire vive de travail 113 sert au stockage temporaire des éléments binaires des messages détectés sur les accès réseau de l'équipement 1, par les circuits analogiques de réception 110, 111 le temps des opérations de sélection et de tri. La mémoire courrier 114 recueille dans différentes cases appelées ports de réception, les messages résultant de la sélection, triés par natures. Elle est destinée à servir de boîte aux lettres de réception pour le circuit principal 10 de l'équipement 1 qui peut la consulter directement ou au travers de l'automate logique 112.

Dans le cadre d'un réseau de transmission de données par paquets, les messages acheminés, au niveau du milieu physique utilisé pour la transmission au sein du réseau, le milieu ambiant (transmission sans fil) ou des câbles électriques ou optiques (transmission par fil), ont la forme de paquets constitués de suites d'éléments binaires ou datagrammes modulant un signal de transmission et circulant l'un derrière l'autre sur les liaisons de transmission du réseau.

Le datagramme constituant un paquet renferme des données utiles ou charge marchande du réseau et des informations de service permettant le routage du paquet au sein du réseau de transmission et le signalement de certaines caractéristiques du paquet utiles à son exploitation dans les équipements destinataires. Son format ou organisation répond à des règles précises dites protocole de couche physique ou de premier niveau, connues de tous les participants au réseau. Les données utiles d'un paquet sont rassemblées dans un champ dit de données utiles lui-même soumis à une organisation précise, connue des équipements destinataires, souvent du même genre que celle d'un paquet, avec à nouveau, un champ de données utiles et des champs d'informations de service. Cette organisation du champ de données utiles d'un paquet répond à des règles dites protocole de couche logique ou de deuxième niveau. Le champ de données utiles défini par le protocole de deuxième niveau peut lui-même avoir un format défini par un protocole de troisième niveau et ainsi de suite, de sorte que l'on se retrouve souvent avec un format de paquet respectant plusieurs couches de protocoles.

Dans le cadre le plus général, les réseaux de transmission de données par paquets 3, 4 acheminent plusieurs variétés des paquets se distinguant par leurs formats qui ne respectent pas, à un niveau ou un autre, les mêmes types de protocoles et les équipements raccordés 1, 2 sont intéressés par plusieurs variétés de paquets. Dans ce cadre, les paquets mis à disposition d'un équipement 1, 2 par les réseaux 3, 4 et intéressant cet équipement 1, 2 doivent être triés par l'automate 112 en fonction de leur variété d'appartenance et se retrouver dans la mémoire courrier 114, dans des files de stockage distinctes appelées par la suite ports de réception.

La sélection, parmi les paquets détectés sur les accès d'un l'équipement 1, 2 aux réseaux de transmission 3, 4 et mis sous forme binaire par les circuits analogiques de réception 110, 111, des paquets intéressants l'équipement 1, 2 ainsi que leur tri en fonction de leur nature par l'automate 112 sont basés sur :
- une affectation d'adresses réseaux spécifiques à chaque équipement 1, 2 raccordé et mises à disposition de tous les participants aux réseaux,
- une affectation d'adresses équipement spécifiques à chaque ports de réception de la mémoire courrier d'un équipement,
- la présence, dans chaque paquet, d'informations de service permettant de connaître la ou les adresses réseaux du ou des équipements destinataires, et, au sein du ou des équipements destinataires, la ou les adresses équipement du ou des ports de réception concernés, et
- une recherche de concordance entre l'adresse réseau et l'adresse équipement du ou des destinataires, extraite des champs d'informations de service d'un paquet et l'adresse réseau de l'équipement concerné et une adresse équipement des ports de réception de l'équipement concerné.

Habituellement, la recherche de concordance entre l'adresse du destinataire figurant dans les informations de service du paquet et l'adresse réseau de l'équipement concerné, et les adresses équipement des ports de réception de cet équipement se fait, soit, par étapes, de manière progressive, soit globalement.

La manière progressive consiste à prendre en compte séparément les différentes couches de protocole d'un paquet en commençant par le protocole de premier niveau de la couche physique. La prise en compte de chaque protocole consiste à extraire des champs d'informations de service du protocole considéré les informations sur l'adresse destinataire qui s'y trouvent, à rechercher une concordance avec un annuaire rassemblant les diverses valeurs qu'elles peuvent prendre lorsque le paquet est destiné à un ou plusieurs ports de réception de l'équipement concerné et à rejeter le paquet en l'absence de concordance ou passer à l'exploitation du protocole de niveau immédiatement supérieur en présence d'une concordance. L'annuaire consulté à chaque niveau de protocole est spécifique à ce niveau et partagé en sous-ensembles d'éléments liés aux éléments de l'annuaire de niveau immédiatement inférieur. On extrait ainsi du paquet une adresse destinataire de plus en plus dégrossie jusqu'à parvenir à l'adresse exacte, réseaux et équipement, du ou des ports de réception destinataires.

La manière globale consiste à extraire une adresse destinataire complète, réseaux et équipement, des informations de service de l'ensemble des protocoles de différents niveaux appliqués au paquet et à comparer cette adresse destinataire complète avec un unique annuaire renfermant les adresses complètes, équipement et réseaux, des ports de réception de l'équipement concerné.

La méthode progressive a l'avantage de permettre de décomposer la recherche de concordance par dichotomie avec, à chaque étape, une consultation d'un annuaire d'adresses renfermant un petit nombre d'adresses partielles et simplifiées réduisant la complexité des opérations de comparaison à la base d'une recherche de concordance mais elle multiplie les étapes intermédiaires tandis que la méthode globale à l'avantage d'être directe mais nécessite la consultation d'un unique annuaire pouvant renfermer un grand nombre d'adresses complètes, réseaux et équipement, pouvant donner lieu à un nombre important d'opérations complexes de comparaison. Les deux méthodes ont l'inconvénient de nécessiter une puissance de calcul importante lorsque le débit des réseaux de transmission est élevé.

On propose ici une méthode médiane consistant à considérer les protocoles de premier et deuxième niveaux comme un tout formant un super-protocole, les protocoles de niveaux supérieurs au deuxième comme un autre tout formant un autre super-protocole et à appliquer la méthode progressive au niveau des super-protocoles ce qui limite ses étapes au nombre de deux. Cette approche se justifie d'autant plus lorsque les informations de service des protocoles de rang élevé peuvent ne pas être présents dans le paquet du fait, notamment, de la fragmentation en plusieurs paquets de la charge marchande du protocole de second niveau

On détaille ci-après l'application de cette méthode médiane de sélection et de tri à un format de paquet utilisé par les réseaux 3, 4 respectant, au premier niveau, celui de la couche physique, un protocole Ethemet MAC répondant aux normes IEEE802.3, au deuxième niveau, un protocole Internet IP, préférablement dans sa version 4, avec, au troisième niveau, plusieurs possibilités de protocole, soit un protocole propriétaire, soit encore, un protocole Internet de type TCP, UDP ou ICMP.

La figure 2 détaille le format d'un tel paquet dans le cas d'un protocole de troisième niveau de type Internet UDP. Le format global du paquet imposé par le protocole de premier niveau de type MAC apparaît dans le tableau supérieur 5. Le format du champ de données utiles Ethemet constituant la charge marchande du réseau, qui est imposé par le protocole de deuxième niveau de type Internet IP, est illustré par le tableau médian 6. Celui du champ de données utile IP ou charge marchande IP imposé par le protocole de troisième niveau de type Internet UDP est illustré par le tableau inférieur 7.

Comme le montre le tableau supérieur 5 de la figure 2, le protocole Ethernet MAC impose, au datagramme d'un paquet, de comporter un champ de données utiles 5a de longueur comprise entre quarante-cinq et quinze cents octets, précédé d'une entête dite entête MAC 5b de vingt-quatre octets dédiée à des informations de service du premier niveau, celui de la couche physique, et suivi d'un code redondant cyclique 5c aussi appelé FCS (acronyme de l'anglo-saxon "Frame Control Sequence") occupant quatre octets et portant sur la totalité du paquet préambule excepté.

L'entête MAC 5b se compose d'un préambule 50 de huit octets servant à la synchronisation, les paquets étant transmis de manière asynchrone, suivi d'une adresse MAC destinataire 51 de six octets, d'une adresse MAC expéditeur 52 de six octets et d'une information de service 53 sur deux octets, consacrée soit à la longueur du paquet en octets si sa valeur est inférieure à 1536, soit au type, c'est-à-dire au protocole de deuxième niveau respecté par le champ de données utiles MAC 5a, lorsque sa valeur est supérieure à 1536. Lorsque le champ de données utiles MAC respecte un protocole IP, la valeur attendue de l'information de service 53 est 0800 en hexadécimal.

Lorsque, comme supposé, le champ de données utiles MAC 5a d'un paquet respecte un protocole IP, l'entête MAC 5b renfermant une information de type 53 ayant la valeur hexadécimale 0800, le datagramme qui le compose est à son tour décomposé, comme le montre le tableau médian 6 de la figure 2, en un champ de données utiles IP 6a constituant la charge marchande au niveau du protocole IP, précédé d'une entête 6b dite entête IP. Dans l'exemple décrit, cette entête correspond à un protocole IPV4 sans champs optionnels et occupe vingt octets consacrés à des informations de service concernant le deuxième niveau, celui du protocole IP souvent désigné couche logique de transport.

L'entête IP 6b comporte un premier champ d'informations de service 60, d'une longueur d'un demi-octet, identifiant la version utilisée du protocole IP et ayant, pour la version 4, la valeur binaire attendue 0100. Ce premier champ d'informations de service 60 est suivi par un ensemble 61 de sept autres champs d'informations de service occupant huit octets et demi parmi lesquelles un champ identificateur de fragment 66 de 2 octets permettant à la couche IP en réception de réconcilier tous les paquets appartenant à un même message, un champ « fragment Offset » 67 de 13 bit permettant de réordonner les bribes d'information contenues dans les paquets réconciliés et un drapeau MF 68 signalant en prenant la valeur zéro que le paquet correspond à un fragment final de message, puis par un champ d'information de service 62, d'une longueur de un octet, identifiant le protocole de troisième niveau respecté par le champ de données utiles IP 6a. Lorsque, comme supposé ici, le champ de données utiles IP 6a respecte le protocole Internet UDP, la valeur attendue de l'information de service 62 est 17 en décimal. A la suite du champ d'information de service 62 identifiant le protocole de troisième niveau on trouve un autre champ d'informations de service 63, d'une longueur de deux octets, puis un champ d'informations de service 64, d'une longueur de quatre octets consacré à une adresse IP expéditeur et un champ d'informations de service 65, d'une longueur de quatre octets, consacré à une adresse IP destinataire.

Lorsque, comme supposé, le champ de données utiles IP 6a respecte un protocole UDP, l'entête IP 6b renfermant un identifiant de protocole de troisième niveau 62 ayant la valeur décimale 17, le datagramme qui le compose est à son tour décomposé, comme le montre le tableau inférieur 7 de la figure 2, en un champ de données utiles UDP 7a constituant la charge marchande au niveau du protocole UDP, précédé d'une entête 7b dite entête UDP de huit octets consacrée à des informations de service concernant le troisième niveau, celui du protocole UDP souvent désigné couche logique de réseau. L'information contenue par l'entête 7b n'est présente que dans les paquets correspondant au premier fragment d'une charge marchande IP fragmentée. De tels paquets sont identifiables par champ « fragment offset » (67) nul.

L'entête UDP 7b comporte un premier champ d'informations de service 70, d'une longueur de deux octets, consacré à une adresse UDP expéditeur identifiant un port d'émission dans l'équipement expéditeur d'où provient la charge marchande contenue dans le champ de données UDP 7a, suivi d'un deuxième champ d'informations de service 71, d'une longueur de deux octets, consacré à une adresse UDP destinataire identifiant un port de réception dans l'équipement destinataire et d'un ensemble 72 de deux autres champs d'informations de service occupant les quatre octets restants.

Un équipement 1, 2 intéressé par la variété de paquets respectant les couches de protocoles MAC/IPv4/UDP dont le format vient d'être détaillé à la figure 2 et par les autres variétés de paquets également présentes qui sont: la variété de paquet respectant les couches de protocoles MAC/IPv4/TCP et celle respectant les couches de protocole MAC/IPv4/ICMP, doit comporter dans sa mémoire courrier 114, au moins un port de réception affecté à chacune de ces catégories de paquets. En outre, il peut comporter d'autres ports de réception pour les paquets qui lui sont adressés mais dont les trois niveaux de protocole ne peuvent être complètement exploités, soit parce que leur protocole de deuxième niveau n'est pas de type IPv4, soit parce que leur protocole de troisième niveau ne correspond ni au protocole UDP, ni au protocole TCP, ni au protocole ICMP.

Les opérations de sélection et de tri de consistent alors, pour l'interface réseau 11 d'un équipement 1, 2 à sélectionner dans les paquets mis à disposition de l'équipement 1, 2 par les réseaux 3, 4 ceux qui lui sont destinés et à les diriger, en fonction de leur variété, vers le ou les ports de réception adéquats de la mémoire courrier 114 de l'équipement. Elles sont menées par l'automate 112 de l'interface réseau d'un équipement 1, 2 sur les versions binaires ou datagrammes des paquets mises dans la mémoire de travail 113 par les circuits analogiques de réception 110, 111 intercalés devant les accès de l'équipement 1, 2 aux réseaux 3, 4.

Comme les circuits analogiques de réception 110, 111 exploitent, pour repérer les début et fin de paquet, le préambule (50 figure 2) de l'entête et le champ final 5c de code redondant cyclique du protocole Ethemet MAC appliqué au premier niveau de la couche physique, ils assurent implicitement un premier filtrage et ne mettent en mémoire de travail 113 que des datagrammes dont le format correspond à un protocole Ethemet MAC.

Le respect d'un protocole Ethemet MAC de premier niveau par les datagrammes de paquets fournis par les circuits analogiques de réception 110, 111 étant assuré, les opérations de sélection et de tri effectuées par l'automate 112 débutent, comme représenté sur le diagramme logique de la figure 3, par une vérification 21 de l'utilisation d'un protocole de deuxième niveau de type IP. Cette vérification 21 est faite en contrôlant la valeur de l'identifiant du protocole de deuxième niveau du paquet figurant, en entête de paquet, dans le champ d'informations de service (53 figure 2) du protocole Ethemet MAC consacré au type, identifiant qui doit valoir 0800 en hexadécimal pour que le protocole de deuxième niveau soit bien de type IP.

Lorsque la vérification 21 échoue, impliquant que le paquet n'utilise pas au deuxième niveau un protocole IP, le paquet est soumis à une recherche de concordance 23 entre la valeur du champ d'informations de services consacrés à l'adresse MAC destinataire (51 figure 2) et celles des adresses MAC destinataire affectées à l'équipement concerné. En l'absence de concordance le paquet est rejeté. En présence d'une concordance, le datagramme figurant dans le champ de données utiles (6a figure 2) est déposé dans un port de réception particulier 24 de la mémoire courrier 114, dit port de réception Ethernet brut.

Lorsque la vérification 21 est positive, démontrant l'utilisation par le paquet, au deuxième niveau, d'un protocole IP, le paquet est soumis à une recherche de concordance 25 entre la combinaison des valeurs des champs d'informations de services consacrés à l'adresse MAC destinataire (51 figure 2) et à l'adresse IP destinataire (65 figure 2) et les combinaisons d'adresses MAC destinataire et IP destinataire affectées à l'équipement concerné. Il est rejeté en l'absence de concordance. Par contre, si une concordance est trouvée, il est soumis à une identification 26 du protocole de troisième niveau utilisé par le paquet.

Cette identification de protocole de troisième niveau se fait par scrutation de la valeur prise par l'identifiant de protocole de troisième niveau figurant, en entête de paquet, dans le champ d'informations de service (62 figure 2) du protocole IP.

Lorsque l'identifiant de protocole de troisième niveau présent dans l'entête de paquet a la valeur 17 en décimal correspondant à un protocole UDP, une étude de fragmentation de message se superpose à la recherche d'un port destinataire car seul un paquet correspondant à un premier fragment d'un message est pourvu d'une adresse destinataire UDP.

Cette étude de fragmentation se fait par analyse des champs identificateur de fragment, fragment Offset et drapeau de fragment final (66, 67, 68 figure 2).

Si l'analyse 27 du champ fragment Offset montre qu'il a la valeur zéro indiquant que le paquet est un premier fragment de message contenant une adresse destination UDP, le paquet est soumis à une recherche de concordance 28 entre la valeur du champ d'informations de services du paquet consacré à l'adresse UDP de port destinataire (71 figure 2) et celles des adresses UDP destinataire affectées à un ou plusieurs ports de réception réservés au protocole UDP dans la mémoire courrier 114 l'équipement concerné. Lorsque la recherche de concordance échoue, le paquet est rejeté. Par contre, à la première concordance trouvée, il y a allocation 29 d'un descripteur de message au paquet si un tel descripteur n'existe pas déjà, et dépôt du datagramme du champ de donnée utiles du paquet dans le port de réception 30 dans la mémoire courrier 114 de l'équipement, dont l'adresse correspond à l'adresse UDP de port destinataire du paquet.

Un descripteur de message établit la relation entre tous les paquets respectant les couches de protocoles UDP/IPv4/MAC et ayant même valeur d'identificateur de fragment. Il est stocké, avec ses congénères dans la mémoire de travail. Créé avec un paquet correspondant à un premier fragment de message, il est détruit avec le paquet correspondant au dernier fragment de message signalé par un drapeau de fin de message MF (68, figure 2) ayant la valeur zéro.

Par simplification, les ports de réception UDP ont été symbolisés sur la figure 3 par un seul port de réception référencé port de réception UDP et indexé par le chiffre 30.

Si l'analyse 27 du champ de fragment d'Offset montre qu'il a une valeur différente de zéro indiquant que le paquet n'est pas un premier fragment de message et ne comporte donc pas d'adresse UDP destinataire, le paquet est soumis à une recherche d'appartenance à un message destiné à l'équipement, par recherche 31 d'un identificateur de message alloué à la valeur prise par son champ d'identification de fragment (66 figure 2). Si aucun identificateur de message a été alloué, le paquet est rejeté. Si un identificateur de message a été alloué, le datagramme du champ de données utiles du paquet est déposé dans le port de réception de l'équipement désigné par le descripteur de message

Lorsque l'identifiant de protocole de troisième niveau présent dans l'entête de paquet a la valeur 6 en décimal correspondant à un protocole TCP, le paquet subit une analyse analogue à celle pratiquée pour un protocole de troisième niveau UDP, le datagramme de son champ de données utiles étant déposé, en cas de résultat favorable de l'analyse, dans un ou plusieurs ports de réception réservés au protocole TCP dans la mémoire courrier 114 de l'équipement. Par simplification, les ports de réception TCP ont été symbolisés sur la figure 3 par un seul port de réception référencé port de réception TCP et indexé par le chiffre 32.

Lorsque l'identifiant de protocole de troisième niveau présent dans l'entête de paquet a la valeur 1 en décimal correspondant à un protocole ICMP, le datagramme du champ de données utiles du protocole ICMP est déposé dans un port de réception particulier 33 dit port de réception ICMP, sans recherche préalable de concordance d'adresse destinataire car ce protocole n'en précise pas.

Lorsque l'identifiant de protocole de troisième niveau présent dans l'entête de paquet n'a aucune des trois valeurs précédentes signalant l'utilisation par le paquet d'un protocole de troisième niveau ne correspondant à aucun des protocoles précédents UDP, TCP ou ICMP, le champ de données utiles du protocole IP (6a figure 2) est déposé dans un port de réception particulier 33 dit port de réception IP brut.

Lors des opérations de sélection et de tri effectuées sur un paquet conformément au diagramme logique de la figure 2, il y a toujours une première recherche de concordance effectuée soit sur l'adresse MAC Destinataire (23) soit sur une combinaison des adresses MAC Destinataire et IP Destinataire (25) figurant dans l'entête du paquet et éventuellement une deuxième recherche de concordance effectuée sur l'adresse UDP/TCP de port destinataire (27, 29) lorsqu'elle figure dans l'entête du paquet.

Pour faciliter et accélérer les exécutions de ces recherches de concordance, on met à contribution, dans chaque équipement, deux annuaires d'adresses, l'un dit des niveaux inférieurs, l'autre dit des niveaux supérieurs stockés dans deux tables placées dans la mémoire de travail 113.

L'annuaire d'adresses des niveaux inférieurs répertorie les adresses MAC Destinataire et les combinaisons d'adresses MAC Destinataire et IP Destinataire qui peuvent se retrouver dans l'entête d'un paquet destiné à l'équipement considéré.

L'annuaire d'adresses des niveaux supérieurs répertorie les adresses UDP/TCP de port destinataire qui peuvent se retrouver dans l'entête d'un paquet destiné à l'équipement considéré, et des adresses UDP/TCP fictives de port destinataire utilisées comme sorties d'annuaire en l'absence de deuxième recherche de concordance. Au sein de la table qui stocke cet annuaire d'adresses de niveaux supérieurs, chaque adresse UDP/TCP fictive ou non de port destinataire est accompagnée d'un lien de compatibilité et d'un lien d'affectation.

Un lien de compatibilité cible, dans l'annuaire d'adresses de niveaux inférieurs, une adresse MAC Destinataire ou une combinaison d'adresses MAC Destinataire et IP Destinataire. Pris dans leur ensemble, les liens de compatibilité ciblent tous les éléments de l'annuaire d'adresses de niveaux inférieurs et constituent un accès à l'annuaire d'adresses de niveaux supérieurs depuis les éléments de l'annuaire d'adresses de niveaux inférieurs. Par commodité, un lien de compatibilité est identifié par l'adresse MAC/IP N° de l'élément qu'il cible dans l'annuaire d'adresse de niveaux inférieurs. Un lien de compatibilité peut être identifié d'une autre manière mais il faut alors qu'il soit associé explicitement à chaque élément de l'annuaire d'adresse de niveaux inférieurs au sein de la table qui stocke cet annuaire.

Le lien de compatibilité d'une adresse UDP/TCP non fictive de port destinataire cible la ou les combinaisons d'adresse MAC Destinataire et IP Destinataire avec lesquelles cette adresse UDP/TCP de port destinataire peut se retrouver dans l'entête d'un paquet. Le lien de compatibilité d'une adresse UDP/TCP fictive de port destinataire cible, dans l'annuaire d'adresses de niveaux inférieurs, soit une ou plusieurs adresses MAC destinataire non combinées avec une adresse IP destinataire, soit une ou plusieurs combinaisons d'adresses MAC Destinataire et IP Destinataire.

Un lien d'affectation identifie la ou les adresses d'un ou plusieurs ports de réception au sein de la mémoire courrier 114 de l'équipement considéré.

Comme une deuxième recherche de concordance sur les adresses UDP/TCP de port destinataire suit nécessairement une première recherche de concordance sur les combinaisons autorisées d'adresses MAC Destinataire et IP Destinataire, la présence des liens de compatibilité mettant en relation tous les éléments de l'annuaire d'adresses de niveaux inférieurs avec des éléments de l'annuaire d'adresses de niveaux supérieurs permet de réduire le domaine de la deuxième recherche de concordance aux seuls éléments de la liste de l'annuaire d'adresses de niveaux supérieurs présentant un lien de compatibilité ciblant le premier élément de l'annuaire d'adresses de niveaux inférieurs apparu comme concordant lors de la première recherche de concordance.

La première recherche de concordance se fait en passant en revue les éléments de l'annuaire d'adresses de niveaux inférieurs, regroupés par valeurs d'adresse MAC destinataire, un groupe d'éléments correspondant à une même valeur d'adresse MAC Destinataire débutant toujours par une adresse MAC isolée pour qu'il donne lieu à la première concordance détectée en cas d'une recherche de concordance sur la seule adresse MAC Destinataire (23 figure2). Cette première concordance sur une valeur d'adresse MAC isolée dans l'annuaire d'adresses de niveaux inférieurs mènera par le lien de compatibilité, dans l'annuaire d'adresse de niveaux supérieurs, à une adresse UDP/TCP fictive de port destinataire puis, par le lien d'affectation de cette adresse UDP/TCP fictive de port destinataire, à un ou plusieurs ports de réception de la mémoire courrier 114 l'équipement.

La deuxième recherche de concordance se fait d'une manière analogue à la première, en passant en revue les éléments de l'annuaire d'adresses de niveaux supérieurs.

La figure 4 détaille la composition d'un élément 8 de l'annuaire d'adresses de niveaux inférieurs d'un équipement. Cet élément 8 comporte au moins trois champs d'informations : un premier champ d'informations 80 contenant une adresse MAC Destinataire affectée à l'équipement, un deuxième champ d'informations 81 contenant une adresse IP destinataire, soit réellement affectée à l'équipement, en ce sens qu'elle peut se retrouver, en combinaison avec l'adresse MAC destinataire occupant le champ d'informations 80, dans une entête de paquet intéressant l'équipement, soit fictive, et un troisième champ d'informations 82 renfermant un drapeau I signalant la nature réelle ou fictive de l'adresse IP destinataire contenue dans le champ d'information 81. Dans le cas d'une recherche dichotomique, le champ 82 participe à la recherche et doit être comparé à un décodage approprié du champ type (53) et éventuellement du champ version IP (60) lors de la recherche de concordance.

Lorsque l'adresse IP destinataire contenue dans le champ d'informations 81 est signalée comme fictive par le drapeau I, l'élément d'annuaire correspond à une adresse MAC destinataire isolée intéressant l'équipement concerné et pour laquelle le service de traitement de la couche IP n'est pas requis. Lorsque l'adresse IP destinataire contenue dans le champ d'informations 81 est signalée comme réelle par le drapeau I, l'élément d'annuaire correspond à une combinaison d'adresse MAC Destinataire et d'adresse IP Destinataire intéressant l'équipement concerné.

En plus de ces trois champs d'informations 80, 81, 82, un élément 8 d'annuaire d'adresses de niveaux inférieurs affecté à un équipement peut comporter d'autres champs d'informations comme des champs d'informations 83, 84 affectés à des codes de correction d'erreur EDC.

Lorsque, comme décrit, les équipements 1, 2 peuvent dialoguer par l'intermédiaire de deux réseaux de transmission différents 3, 4, l'identité du réseau ou canal d'où provient le paquet examiné est facilement repérable au niveau de l'interface réseau 11 et peut constituer une information utile pour l'exploitation du paquet. Dans ce cas, la valeur attendue C de l'identité de canal pour un paquet, dont l'adresse MAC destination ou la combinaison d'adresse MAC Destination et IP Destination correspondent à l'élément 8 d'annuaire considéré, est systématiquement ajoutée à cet élément 8 dans un champ d'informations spécifique 85, avec un drapeau Xc placé dans un autre champ d'informations spécifique 86 signalant si l'information C de canal figurant dans le champ d'informations 85 l'élément 8 d'annuaire est ou non à prendre en considération lors d'une recherche de concordance.

Les opérations de sélection et de tri des paquets en entrées d'un équipement peuvent faire appel, lors de la première recherche de concordance dans l'annuaire d'adresses de niveaux inférieurs affecté à l'équipement, à une analyse comparative plus poussée portant également sur d'autres informations de service des deux premiers niveaux de protocole du paquet. Dans ce cas, d'autres champs d'informations peuvent être incorporés à l'élément 8 d'annuaire d'adresses de niveaux inférieurs affecté à un équipement comme le signale la présence de cases vides dans la figure 4.

Dans le cas où une recherche dichotomique parmi les éléments de la liste d'adresses de l'annuaire de niveaux inférieurs doit être mise en oeuvre, il est nécessaire d'organiser cette liste avec une relation d'ordre strict permettant, lors de la recherche dichotomique, de connaître la direction dans laquelle la recherche doit se poursuivre si la concordance n'est pas atteinte. Les champs participant à cette relation d'ordre sont les champs 80, 81, 82, 85 et 86

La figure 5 détaille la composition d'un élément 9 de l'annuaire d'adresses de niveaux supérieurs d'un équipement. Cet élément 9 comporte au moins quatre champs d'informations : un premier champ d'informations 90 contenant un lien de compatibilité consistant ici dans l'adresse d'un l'élément cible dans l'annuaire d'adresses de niveaux inférieurs de l'équipement, un deuxième champ d'informations 91 contenant une adresse UDP/TCP de port destinataire, soit réellement affectée à l'équipement, en ce sens qu'elle peut se retrouver dans le champ d'informations (71 figure 2) en entête de paquet intéressant l'équipement, soit fictive, un troisième champ d'informations 92 renfermant un double drapeau P signalant la nature réelle ou fictive de l'adresse UDP/TCP destinataire contenue dans le champ d'information 91 et un quatrième champ d'informations 93 renfermant une adresse de port de réception de la mémoire courrier de 114 de l'équipement.

Le double drapeau P signale la nature réelle ou fictive d'une adresse UDP/TCP de port destinataire par le biais de l'affectation de l'élément 9 d'annuaire concerné à un type déterminé de protocole de troisième niveau : UDP, TCP, ICMP ou autre. Lorsqu'il identifie un protocole UDP ou TCP, il indique une nature réelle tandis que lorsqu'il identifie un protocole ICMP ou autre, il indique une nature fictive.

Dans le cas d'une recherche dichotomique, le champ 92 participe à la recherche et doit être comparé à un décodage approprié des champ type 53 et éventuellement du champ version IP 60 ainsi que du champ Protocole 62 lors de la recherche de concordance.

Lorsque l'adresse UDP/TCP de port destinataire contenue dans le champ d'informations 91 est signalée comme fictive par le double drapeau P, l'élément 9 d'annuaire correspond à un port pour lequel la prise en compte d'une adresse de port UDP ou TCP n'est pas requise.

L'adresse de ports de réception contenue dans le champ d'informations 93 permet, dès la concordance trouvée sur l'adresse UDP/TCP de port destinataire dans l'annuaire d'adresses des niveaux supérieurs, que cette concordance soit triviale, l'adresse UDP/TCP de port destinataire étant fictive, ou non, l'adresse UDP/TCP de port destinataire étant réelle, d'affecter les données utiles de chaque paquet ayant satisfait aux recherches de concordance à ou aux ports de réception adéquats de la mémoire courrier 114 de l'équipement.

En plus de ces quatre champs d'informations 90, 91, 92, 93, un élément 9 d'annuaire d'adresses de niveaux inférieurs affecté à un équipement peut également comporter d'autres champs d'informations comme des champs d'informations 94, 95 affectés à des codes de correction d'erreur EDC ou des champs d'informations 96, 97 affectés respectivement, à une valeur C de canal ou réseau de provenance et à un drapeau Xc signalant si cette information C de canal figurant dans l'élément 9 d'annuaire est ou non à prendre en considération lors d'une recherche de concordance.

Comme précédemment, les opérations de sélection et de tri des paquets en entrées d'un équipement peuvent faire appel, lors de la deuxième recherche de concordance dans l'annuaire d'adresses de niveaux supérieurs affecté à l'équipement, à une analyse comparative plus poussée portant également sur d'autres informations de service du troisième niveau du paquet. Dans ce cas, d'autres champs d'informations peuvent être incorporés à l'élément 9 d'annuaire d'adresses de niveaux inférieurs affecté à un équipement comme le signale la présence de cases vides dans la figure 5.

On remarque que l'annuaire d'adresses des niveaux supérieurs sert également de table de concordance entre les adresses UDP/TCP fictive ou non, de port destinataire des paquets, et des adresses locales, uniquement valables au sein d'un équipement, affectées à ses différents ports de réception rassemblés au sein de sa mémoire courrier 114. Cela permet de faire évoluer la configuration des ports réception d'un équipement de façon relativement indépendante des réseaux de transmission auquel il est relié, l'effet d'une modification se limitant à une mise à jour de l'annuaire d'adresses de niveaux supérieurs de l'équipement.

Dans le cas où une recherche dichotomique parmi les éléments de la liste d'adresses de l'annuaire de niveaux supérieurs doit être mise en oeuvre, il est nécessaire d'organiser cette liste selon une relation d'ordre strict permettant lors de la recherche dichotomique de connaître la direction dans laquelle la recherche doit se poursuivre si la concordance n'est pas atteinte. Les champs participant à cette relation d'ordre sont les champs 90, 81, 82, 96 et 97.

La figure 6 représente un exemple d'une liste 120 d'allocation de descripteurs de message 121 permettant l'allocation des identificateurs de fragments de message à un numéro de port de réception. Une telle liste est stockée en mémoire de travail. Chaque liste est associée à un lien de compatibilité. Chaque élément de la liste est associé à un descripteur de message qui est un espace en mémoire de travail regroupant les pointeurs vers chacun des fragments constitutifs du message et sur lequel s'appuie la couche IP en réception pour reconstituer la charge marchande IP.

Chaque élément 121 possède :
- un champ identificateur de fragment 122 recevant la valeur du champ identificateur de fragment extrait de l'entête IP lors de l'allocation du descripteur de message associé à un nouveau message entrant.
- Un bit U 123 indiquant que l'élément est utilisé ou libre. Ce bit est mis à l'état actif lors de l'allocation du descripteur de message à un nouveau message entrant, il est remis à l'état inactif par la couche IP lorsque le descripteur de message a entièrement été exploité (message entièrement déposé en mémoire courrier ou abandonné alors que tous les derniers fragments ont été reçus sur la ou les voies d'entrée)
- Un champ alias de port 124 permettant de retrouver le port correspondant au message. Ce champ est initialisé à l'issue de la recherche dans l'annuaire d'adresses de niveaux supérieurs lors de la réception du premier fragment du message. Ce champ peut par exemple coder directement le numéro de port, il peut aussi avantageusement coder l'adresse de l'élément du second annuaire pour lequel la concordance a été trouvée. Ceci permet alors d'accéder au numéro de port ainsi qu'aux autres informations stockées dans cet élément d'annuaire.

La figure 7 représente sous la forme d'un organigramme la succession des activités dans le cas exemplaire de la réception UDP/IP pour une transmission non redondante. Les étapes 25 et 28 de la figure 3 y apparaissent avec plus de détail. Cette figure fait apparaître les deux branches possibles de l'étape 28.

## Revendications

1. Procédé de sélection et de tri de paquets de données mis à disposition d'un équipement (1, 2), par au moins un réseau de transmission de données par paquets (3, 4) employant un format de paquets pouvant répondre à trois niveaux de protocoles :
- un protocole de premier niveau (5) correspondant à une couche physique de transmission de réseau (3, 4), régissant le format général d'un paquet et imposant la présence dans un paquet, d'une part, d'un champ de données utiles (5a) dit de premier niveau et, d'autre part, de champs d'informations de service (5b) dits de premier niveau dont un (51), dit adresse destinataire couche physique, est affecté à une première adresse de destinataire, et un autre (53) est affecté à un identifiant de protocole de deuxième niveau,
- un protocole de deuxième niveau (6) régissant le format du champ de données utiles (5a) de premier niveau et pouvant imposer une partition du champ de données utiles de premier niveau (5a) en un champ de données utiles (6a) dit de deuxième niveau et en des champs d'informations de service (6b) dits de deuxième niveau dont un (65), dit adresse destinataire de deuxième niveau, est affecté à une deuxième adresse de destinataire, et un (62) autre affecté à un identifiant de protocole de troisième niveau, et
- un protocole de troisième niveau (7) régissant le format du champ de données utiles de deuxième niveau (6a) et pouvant imposer une partition du champ de données utiles de deuxième niveau (6a) en un champ de données utiles (7a) dit de troisième niveau et en des champs de données de service (7b) dits de troisième niveau,
ledit procédé étant **caractérisé en ce qu'**il consiste à :
- constituer un annuaire d'adresses dit de niveaux inférieurs rassemblant, sous forme d'une liste d'éléments (8), les différentes valeurs prises par les informations d'adressage apparaissant dans les champs d'informations de service (5b, 6b) des protocoles des premier et deuxième niveaux lorsqu'elles concernent l'équipement,
- constituer un annuaire d'adresses dit de niveaux supérieurs rassemblant, sous forme d'une liste d'éléments (9), les différentes valeurs prises par les informations d'adressage apparaissant dans les champs d'informations de service (7b) des protocoles de niveaux supérieurs au deuxième niveau lorsqu'elles concernent l'équipement,
- établir, pour chaque élément (8) de la liste de l'annuaire d'adresses de niveaux inférieurs un lien de compatibilité avec un ou plusieurs éléments (9) de la liste de l'annuaire d'adresses de niveaux supérieurs, ce lien de compatibilité signalant la possibilité, pour deux éléments (8, 9) liés, de se retrouver simultanément dans les champs d'informations de service (5b, 6b, 7b) d'un même paquet,
- établir pour chaque élément (9) de la liste de l'annuaire d'adresses de niveaux supérieurs, un lien d'affectation (93) à au moins un port de réception (24, 30, 32, 33, 34) de l'équipement (1, 2), et
pour chaque paquet mis à disposition de l'équipement (1, 2) par les réseaux de transmission de données (3, 4) :
- lire les informations d'adressage contenues dans les champs d'informations de service (5b, 6b) des protocoles des premier et deuxième niveaux,
- rechercher une concordance (23, 25) entre les informations d'adressage lues dans les champs d'informations de service (5b, 6b) des protocoles de premier et deuxième niveaux et un élément (8) de la liste de l'annuaire d'adresses de niveaux inférieurs,
en l'absence d'élément concordant,
- rejeter le paquet,
en présence d'un élément concordant,
- prendre en considération le lien de compatibilité du premier élément (8) concordant pour sélectionner dans la liste des
- éléments (9) l'annuaire d'adressage de niveaux supérieurs, les éléments compatibles
- lire les informations d'adressage contenues dans les champs d'informations de service (7b) des protocoles de niveaux supérieurs au deuxième,
lorsque des informations d'adressage contenues dans les champs d'informations de service des protocoles de niveaux supérieurs au deuxième sont présentes,
- rechercher une concordance (28) entre ces informations et un des éléments (9) compatibles de la liste de l'annuaire d'adresses de niveaux supérieurs,
en l'absence d'éléments concordant,
- rejeter le paquet,
en présence d'un élément concordant,
- sélectionner le paquet mis à disposition,
- prendre en considération le lien d'affectation (93) de l'élément concordant,
- adresser les données utiles du paquet aux ports de réception (24, 30, 32, 33 ou 34) de l'équipement désignés par le lien d'affectation (93), et
- créer, s'il n'existe pas déjà, un descripteur de message alloué établissant une relation entre les ports de réception (24, 30, 32, 33 ou 34) désignés par le lien d'affectation (93), le lien de compatibilité et la valeur d'un éventuel champ d'informations de service de second niveau affecté à une identification de fragment de message pour permettre de réconcilier ultérieurement, les fragments entrants ne possédant pas d'informations d'adressage contenues dans les champs d'informations de service des protocoles de niveaux supérieurs au deuxième,
lorsque des informations d'adressage contenues dans les champs d'informations de service des protocoles de niveaux supérieurs au deuxième ne sont pas présentes,
- rechercher parmi les descripteurs de messages alloués ouverts une concordance au niveau du lien de compatibilité et de la valeur d'un éventuel champ d'information de service de second niveau affecté à une identification de fragment de message,
en l'absence d'éléments concordant,
- rejeter le paquet,
en présence d'un élément concordant,
- sélectionner le paquet mis à disposition,
- prendre en considération le lien d'affectation de l'élément concordant,
- adresser les données utiles du paquet aux ports de réception de l'équipement désignés par le lien d'affectation, et
- rechercher dans les champs d'informations de service du second niveau du paquet une information de fin de message permettant de mettre un terme au descripteur de message alloué considéré.

2. Procédé selon la revendication 1, **caractérisé en ce que** les recherches de concordance sont faites au sein des listes des éléments (8, 9) des annuaires d'adresses de niveaux inférieurs et de niveaux supérieurs en suivant une méthode dichotomique dans des listes préalablement ordonnées.

3. Procédé selon la revendication 1, **caractérisé en ce que** les éléments (8) de l'annuaire d'adresses de niveaux inférieurs sont stockés dans une première table, leurs adresses (MAC/IP N°) au sein de cette première table identifiant les liens de compatibilité qui leurs sont associés.

4. Procédé selon la revendication 1, **caractérisé en ce que** les éléments (9) de l'annuaire d'adresses de niveaux supérieurs sont stockés au sein d'une deuxième table, chacun d'eux étant associé, au sein de cette deuxième table à un lien de compatibilité (90) et à un lien d'affectation (93).

5. Procédé selon la revendication 1, appliqué dans le cadre de réseaux Ethernet avec des paquets respectant un protocole de premier niveau de type MAC et un protocole de deuxième niveau de type IP, **caractérisé en ce que** chaque élément (8) de l'annuaire d'adresses de niveaux inférieurs renferme au moins une valeur particulière (80) du champ d'adresse destinataire MAC et une valeur particulière (81) du champ d'adresse destinataire IP.

6. Procédé selon la revendication 1, appliqué dans le cadre de réseaux Ethernet avec des paquets respectant un protocole de premier niveau de type MAC imposant, parmi les champs de service d'un paquet, un champ (53) identifiant le protocole respecté par les paquets au deuxième niveau et un protocole de deuxième niveau de type IP, **caractérisé en ce que** chaque élément (8) de l'annuaire d'adresses de niveaux inférieurs renferme au moins une valeur particulière (80) du champ d'adresse destinataire MAC; une valeur particulière (81) du champ d'adresse destinataire IP et un drapeau (82) d'invalidation de la valeur particulière (81) du champ adresse destinataire IP en cas de non-reconnaissance d'un protocole de deuxième niveau type IP.

7. Procédé selon la revendication 1, appliqué dans le cadre d'un réseau dupliqué constitué de deux réseaux Ethernet indépendants (3, 4) ayant chacun accès à l'équipement (1, 2), chacun des deux réseaux Ethernet ayant des paquets respectant un protocole de premier niveau de type MAC et un protocole de deuxième niveau de type IP, et dans le cadre d'équipements (1, 2) en mesure d'identifier le ou les réseaux (3, 4) de provenance d'un paquet, **caractérisé en ce que** chaque élément (8) de l'annuaire d'adresses de niveaux inférieurs renferme au moins une valeur particulière (80) du champ d'adresse destinataire MAC, une valeur particulière (81) du champ d'adresse destinataire IP, un identifiant (85) du ou des réseaux de provenance du paquet compatible avec ces valeurs particulières (80, 81) de champ d'adresse destinataire MAC et IP, et un drapeau de validation (86) de l'identifiant (85) du ou des réseaux de provenance du paquet.

8. Procédé selon la revendication 1, appliqué dans le cadre de réseaux Ethemet avec des paquets respectant un protocole de premier niveau de type MAC imposant, parmi les champs de service d'un paquet, un champ (53) identifiant les protocoles respectés par les paquets au deuxième niveau, un protocole de deuxième niveau de type IP et un protocole de troisième niveau appartenant à un groupe de protocoles contenant les protocoles UDP et TCP, **caractérisé en ce que** chaque élément (9) de l'annuaire de niveaux supérieurs renferme au moins une valeur particulière (91) de champ d'adresse UDP/TCP de port destinataire et un double drapeau (92) de validation de la valeur particulière (91) de champ d'adresse UDP/TCP de port destinataire identifiant par la même occasion un protocole de troisième niveau compatible avec ladite valeur particulière (91) de champ d'adresse UDP/TCP de port destinataire.

9. Procédé selon la revendication 1, appliqué dans le cadre d'un réseau dupliqué constitué de deux réseaux Ethemet indépendants (3, 4) ayant chacun accès à l'équipement (1, 2), chacun des deux réseaux Ethemet (3, 4) ayant des paquets respectant un protocole de premier niveau de type MAC, un protocole de deuxième niveau de type IP et un protocole de troisième niveau appartenant à un groupe de protocoles contenant les protocoles UDP et TCP, et dans le cadre d'équipements (1, 2) en mesure d'identifier le ou les réseaux de provenance du paquet, **caractérisé en ce que** chaque élément (9) de l'annuaire de niveaux supérieurs renferme au moins une valeur particulière (91) de champ d'adresse UDP/TCP de port destinataire, un double drapeau (92) de validation de la valeur particulière (91) de champ d'adresse UDP/TCP de port destinataire identifiant par la même occasion un protocole de troisième niveau compatible avec ladite valeur particulière (91) de champ d'adresse UDP/TCP de port destinataire, un identifiant (96) du ou des réseaux de provenance du paquet compatibles avec cette valeur particulière (91) de champ d'adresse UDP/TCP de port destinataire, et un drapeau de validation (97) de l'identifiant (96) du ou des réseaux de provenance du paquet.

## Claims

1. Method of selecting and sorting data packets made available to a grid (1, 2), by at least one packet data transmission network (3, 4) employing a packet format able to comply with three levels of protocols:
- a first level protocol (5) corresponding to a network transmission physical layer (3, 4), governing the general format of a packet and imposing the presence in a packet, on the one hand, of a so-called first level useful-data field (5a) and, on the other hand, of so-called first level service information fields (5b), including one (52) so-called physical layer destination address, is assigned to a first destination address and another (53) is assigned to a second level protocol identifier,
- a second level protocol (6) governing the format of the first level useful-data field (5a) and able to impose a partition of the first level useful-data field (5a) into a so-called second level useful-data field (6a) and into the so-called second level service information fields (6b), of which one (65), so-called second level destination address is assigned to a second destination address, and including one other (62) assigned to a third level protocol identifier, and
- a third level protocol (7) governing the format of the second level useful-data field (6a) and able to impose a partition of the second level useful-data field (6a) into a so-called third level useful-data field (7a) and into so-called third level service data fields (7b),
said method being **characterized in that** it consists in:
- constructing a directory of so-called lower level addresses mustering, in the form of a list of elements (8), the various values taken by the addressing information appearing in the service information fields (5b, 6b) of the protocols of the first and second levels when they relate to the installation,
- constructing a directory of so-called higher level addresses mustering, in the form of a list of elements (9), the various values taken by the addressing information appearing in the service information fields (7b) of the protocols of levels higher than the second level when they relate to the installation,
- establishing, for each element (8) of the list of the directory of lower level addresses a compatibility link with one or more elements (9) of the list of the directory of higher level addresses, this compatibility link signaling the possibility, in respect of two linked elements (8, 9), of simultaneously being in the service information fields (5b, 6b, 7b) of one and the same packet,
- establishing for each element (9) of the list of the directory of higher level addresses, an assignment link (93) to at least one reception port (24, 30, 32, 33, 34) of the installation (1, 2), and
for each packet made available to the installation (1, 2) by the data transmission networks (3, 4):
- reading the addressing information contained in the service information fields (5b, 6b) of the protocols of the first and second levels,
- searching for a match (23, 25) between the addressing information read from the service information fields (5b, 6b) of the protocols of first and second levels and an element (8) of the list of the directory of lower level addresses,
in the absence of any matching element,
- rejecting the packet,
in the presence of a matching element,
- taking into consideration the compatibility link of the first matching element (8) so as to select from the list of elements (9) the higher levels addressing directory, the compatible elements,
- reading the addressing information contained in the service information fields (7b) of the protocols of levels higher than the second,
when addressing information containing the service information fields of the protocols of levels higher than the second are present,
- searching for a match (28) between this information and one of the compatible elements (9) of the list of the directory of higher level addresses,
in the absence of matching elements,
- rejecting the packet,
in the presence of a matching element,
- selecting the packet made available,
- taking into consideration the assignment link (93) of the matching element,
- addressing the useful data of the packet to the reception ports (24, 30, 32, 33 or 34) of the installation that are designated by the assignment link (93), and
- creating, if it does not already exist, an allocated message descriptor establishing a relation between the reception ports (24, 30, 32, 33 or 34) designated by the assignment link (93), the compatibility link and the value of a possible second level service information field assigned to a message fragment identification so as to make it possible to reconcile later, the incoming fragments not possessing any addressing information contained in the service information fields of the protocols of levels higher than the second,
when addressing information contained in the service information fields of the protocols of levels higher than the second are not present,
- searching through the open allocated message descriptors for a match at the level of the compatibility link and of the value of a possible second level service information field assigned to a message fragment identification,
in the absence of matching elements,
- rejecting the packet,
in the presence of a matching element,
- selecting the packet made available,
- taking into consideration the assignment link of the matching element,
- addressing the useful data of the packet to the reception ports of the installation that are designated by the assignment link, and
- searching through the service information fields of the second level of the packet for an end of message information item making it possible to terminate the allocated message descriptor considered.

2. Method according to Claim 1, **characterized in that** the searches for a match are made within the lists of the elements (8, 9) of the directories of lower level and of higher level addresses by following a dichotomy procedure in previously ordered lists.

3. Method according to Claim 1, **characterized in that** the elements (8) of the directory of lower level addresses are stored in a first table, their addresses (MAC/IP N°) within this first table identifying the compatibility links associated with them.

4. Method according to Claim 1, **characterized in that** the elements (9) of the directory of higher level addresses are stored within a second table, each of them being associated, within this second table with a compatibility link (90) and with an assignment link (93).

5. Method according to Claim 1, applied within the framework of Ethernet networks with packets respecting a first level protocol of MAC type and a second level protocol of IP type, **characterized in that** each element (8) of the directory of lower level addresses holds at least one particular value (80) of the MAC destination address field and a particular field (81) of the IP destination address field.

6. Method according to Claim 1, applied within the framework of Ethernet networks with packets respecting a first level protocol of MAC type imposing, among the service fields of a packet, a field (53) identifying the protocol respected by the packets at the second level and a second level protocol of IP type, **characterized in that** each element (8) of the directory of lower level addresses holds at least one particular value (80) of the MAC destination address field, one particular value (81) of the IP destination address field and a flag (82) for invalidating the particular value (81) of the IP destination address field in case of non-recognition of an IP type second level protocol.

7. Method according to Claim 1, applied within the framework of a duplicate network consisting of two independent Ethernet networks (3, 4) each having access to the installation (1, 2), each of the two Ethernet networks having packets respecting a first level protocol of MAC type and a second level protocol of IP type, and within the framework of installations (1, 2) able to identify the network or networks (3, 4) of origin of a packet, **characterized in that** each element (8) of the directory of lower level addresses holds at least one particular value (80) of the MAC destination address field, one particular value (81) of the IP destination address field, an identifier (85) of the network or networks of origin of the packet compatible with these particular values (80, 81) of MAC and IP destination address field, and a validation flag (86) for the identifier (86) of the network or networks of origin of the packet.

8. Method according to Claim 1, applied within the framework of Ethernet networks with packets respecting a first level protocol of MAC type imposing, among the service fields of a packet, a field (53) identifying the protocols respected by the packets at the second level, a second level protocol of IP type and a third level protocol belonging to a group of protocols containing the UDP and TCP protocols, **characterized in that** each element (9) of the directory of higher levels holds at least one particular value (91) of destination port UDP/TCP address field and a double flag (92) for validating the particular value (91) of destination port UDP/TCP address field identifying at the same time a third level protocol compatible with said particular value (91) of destination port UDP/TCP address field.

9. Method according to Claim 1, applied within the framework of a duplicate network consisting of two independent Ethernet networks (3, 4) each having access to the installation (1, 2), each of the two Ethernet networks (3, 4) having packets respecting a first level protocol of MAC type, a second level protocol of IP type and a third level protocol belonging to a group of protocols containing the UDP and TCP protocols, and within the framework of installations (1, 2) able to identify the network or networks of origin of the packet, **characterized in that** each element (9) of the directory of higher levels holds at least one particular value (91) of destination port UDP/TCP address field, a double flag (92) for validating the particular value (91) of destination port UDP/TCP address field identifying at the same time a third level protocol compatible with said particular value (91) of destination port UDP/TCP address field, an identifier (96) of the network or networks of origin of the packets that are compatible with this particular value (91) of destination port UDP/TCP address field, and a validation flag (97) for the identifier (96) of the network or networks of origin of the packet.

## Patentansprüche

1. Verfahren zum Auswählen und Sortieren von Datenpaketen, die einer Ausstattung (1, 2), durch mindestens ein Paketdatenübertragungssystem (3, 4) bereitgestellt werden, das ein Paketformat verwendet, das drei Protokollniveaus entsprechen kann:
- einem Protokoll ersten Niveaus (5), das einer physikalischen Netzübertragungsschicht (3, 4) entspricht, die das allgemeine Format eines Pakets regelt und die Gegenwart in einem Paket einerseits eines Nutzdatenfelds (5a), des ersten Niveaus genannt, und andererseits von Dienstinformationsfeldern (5b) des ersten Niveaus genannt auferlegt, von welchen eines, (51), Zieladresse physikalische Schicht genannt, einer ersten Zieladresse zugewiesen ist, und ein anderes (53) einem Protokollidentifikator zweiten Niveaus zugewiesen ist,
- einem Protokoll zweiten Niveaus (6), das das Format des Nutzdatenfelds (5a) ersten Niveaus regeln und eine Partition des Nutzdatenfelds ersten Niveaus (5a) in ein Nutzdatenfeld (6a), zweiten Niveaus genannt, und in Dienstdatenfelder (6b) zweiten Niveaus genannt auferlegen kann, von welchen eines, (65), Zieladresse zweiten Niveaus genannt, einer zweiten Zieladresse zugewiesen ist, und ein anderes (62) einem Protokollidentifikator dritten Niveaus zugewiesen ist, und
- einem Protokoll dritten Niveaus (7), das das Format des Nutzdatenfelds zweiten Niveaus (6a) regelt und eine Partition des Nutzdatenfelds zweiten Niveaus (6a) in ein Nutzdatenfeld (7a), dritten Niveaus genannt, und in Dienstdatenfelder (7b), dritten Niveaus genannt, auferlegen kann,
wobei das Verfahren **dadurch gekennzeichnet, dass** es aus Folgendem besteht:
- Bilden eines Adressverzeichnisses unterer Niveaus genannt, das in Form einer Elementeliste (8) die verschiedenen Werte zusammenfasst, die von den Adressierinformationen angenommen werden, die in jedem Dienstinformationsfeld (5b, 6b) der Protokolle ersten und zweiten Niveaus erscheinen, wenn sie die Ausstattung betreffen,
- Bilden eines Adressverzeichnisses, höherer Niveaus genannt, das in Form einer Elementeliste (9) die verschiedenen Werte zusammenfasst, die von den Adressierinformationen, die in den Dienstinformationsfeldern (7b) der Protokolle höherer Niveaus als das zweite Niveau erscheinen, angenommen werden, wenn sie die Ausstattung betreffen,
- für jedes Element (8) der Liste des Adressverzeichnisses unterer Niveaus Erstellen eines Kompatibilitätslinks mit einem oder mehreren Elementen (9) der Liste des Adressverzeichnisses höherer Niveaus, wobei dieser Kompatibilitätslink die Möglichkeit für zwei verbundene Elemente (8, 9) meldet, sich gleichzeitig in den Dienstinformationsfeldern (5b, 6b, 7b) eines gleichen Pakets zu befinden,
- Erstellen für jedes Element (9) der Liste des Adressverzeichnisses höherer Niveaus eines Zuweisungslinks (93) zu mindestens einer Empfangsschnittstelle (24, 30, 32, 33, 34) der Ausstattung (1, 2), und
für jedes der Ausstattung (1, 2) von den Datenübertragungsnetzen (3, 4) zur Verfügung gestellte Paket:
- Lesen der Adressierinformationen, die in den Dienstinformationsfeldern (5b, 6b) der Protokolle ersten und zweiten Niveaus enthalten sind,
- Suchen einer Übereinstimmung (23, 25) zwischen den Adressierinformationen, die in den Dienstinformationsfeldern (5b, 6b) der Protokolle ersten und zweiten Niveaus gelesen werden, und einem Element (8) der Liste des Adressverzeichnisses unterer Niveaus,
mangels eines übereinstimmenden Elements
- Zurückweisen des Pakets,
bei Gegenwart eines übereinstimmenden Elements
- Berücksichtigen des Kompatibilitätslinks des ersten übereinstimmenden Elements (8), um aus der Liste der Elemente (9) des Adressverzeichnisses höherer Niveaus die kompatiblen Elemente auszuwählen,
- Lesen der Adressierinformationen, die in den Dienstinformationsfeldern (7b) der Protokolle von Niveaus, die höher sind als das zweite, enthalten sind,
wenn Adressierinformationen, die in den Dienstinformationsfeldern der Protokolle höherer Niveaus als das zweite enthalten sind, gegenwärtig sind,
- Suchen einer Übereinstimmung (28) zwischen diesen Informationen und einem der kompatiblen Elemente (9) der Liste des Adressverzeichnisses höherer Niveaus,
mangels übereinstimmender Elemente,
- Zurückweisen des Pakets,
bei Gegenwart eines übereinstimmenden Elements,
- Auswählen des bereitgestellten Pakets,
- Berücksichtigen des Zuweisungslinks (93) des übereinstimmenden Elements,
- Adressieren der Nutzdaten des Pakets zu den Empfangsschnittstellen (24, 30, 32, 33 oder 34) der Ausstattung, die von dem Zuweisungslink (93) bezeichnet werden, und,
- falls er noch nicht existiert, Anlegen eines zugeordneten Meldungsdeskriptors, der eine Beziehung zwischen den Empfangsschnittstellen (24, 30, 32, 33 oder 34), die von dem Zuweisungslink (93), dem Kompatibilitätslink und dem Wert eines eventuellen Dienstinformationenfelds zweiten Niveaus, das einer Meldungsfragmentidentifikation zugewiesen ist, bezeichnet werden, erstellt, um es zu erlauben, später die eingehenden Fragmente, die keine Adressierinformationen besitzen, die in den Dienstinformationsfeldern der Protokolle höherer Niveaus als das zweite Niveau enthalten sind, wieder zu vereinen,
wenn Adressierinformationen, die in den Dienstinformationsfeldern der Protokolle höherer Niveaus als das zweite enthalten sind, nicht gegenwärtig sind,
- Suchen einer Übereinstimmung unter den offenen zugeordneten Meldungsdeskriptoren auf dem Niveau des Kompatibilitätslinks und des Werts eines eventuellen Dienstinformationsfelds zweiten Niveaus, das einer Meldungsfragmentidentifikation zugewiesen ist,
mangels übereinstimmender Elemente
- Zurückweisen des Pakets,
bei Gegenwart eines übereinstimmenden Elements
- Auswählen des bereitgestellten Pakets,
- Berücksichtigen des Zuweisungslinks des übereinstimmenden Elements,
- Adressieren der Nutzdaten des Pakets zu den Empfangsschnittstellen der von dem Zuweisungslink bezeichneten Ausstattung, und
- Suchen in den Dienstinformationsfeldern des zweiten Niveaus des Pakets einer Meldungsendinformation, die es erlaubt, den betreffenden zugeordneten Meldungsdeskriptor zu beenden.

2. Verfahren nach Anspruch 1, **dadurch gekennzeichnet, dass** die Übereinstimmungssuchen innerhalb der Elementelisten (8, 9) der Adressverzeichnisse unterer Niveaus und höherer Niveaus unter Anwenden einer dichotomischen Methode in den zuvor geordneten Listen erfolgen.

3. Verfahren nach Anspruch 1, **dadurch gekennzeichnet, dass** die Elemente (8) des Adressverzeichnisses unterer Niveaus in einer ersten Tabelle gespeichert sind, wobei ihre Adressen (MAC/IP-Nr.) innerhalb dieser ersten Tabelle die Kompatibilitätslinks, die zu ihnen gehören, identifizieren.

4. Verfahren nach Anspruch 1, **dadurch gekennzeichnet, dass** die Elemente (9) des Adressverzeichnisses höherer Niveaus in einer zweiten Tabelle gespeichert sind, wobei jedes innerhalb dieser zweiten Tabelle zu einem Kompatibilitätslink (90) und einem Zuweisungslink (93) gehört.

5. Verfahren nach Anspruch 1, das im Rahmen von Ethernet-Netzen mit Paketen, die ein Protokoll ersten Niveaus des Typs MAC und ein Protokoll des zweiten Niveaus des Typs IP einhalten, angewandt wird, **dadurch gekennzeichnet, dass** jedes Element (8) des Adressverzeichnisses unterer Niveaus mindestens einen besonderen Wert (80) des Zieladressfelds MAC und einen besonderen Wert (81) des Zieladressfelds IP enthält.

6. Verfahren nach Anspruch 1, angewandt im Rahmen von Ethernet-Netzen mit Paketen, die ein Protokoll ersten Niveaus des Typs MAC einhalten, das unter den Dienstfeldern eines Pakets ein Feld (53) auferlegt, das das von den Paketen auf dem zweiten Niveau eingehaltene Protokoll identifiziert, und ein Protokoll zweiten Niveaus des Typs IP, **dadurch gekennzeichnet, dass** jedes Element (8) des Adressverzeichnisses unterer Niveaus mindestens einen besonderen Wert (80) des Zieladressfelds MAC, einen besonderen Wert (81) des Zieladressfelds IP und ein Flag (82) zum Ungültigmachen des besonderen Werts (81) des Zieladressfelds IP in dem Fall des Nichterkennens eines Protokolls zweiten Niveaus des Typs IP enthält.

7. Verfahren nach Anspruch 1, angewandt im Rahmen eines duplizierten Netzes bestehend aus zwei unabhängigen Ethernet-Netzen (3, 4), das jeweils Zugang zu der Ausstattung (1, 2) hat, wobei jedes der zwei Ethernet-Netze Pakete hat, die ein Protokoll ersten Niveaus des Typs MAC und ein Protokoll zweiten Niveaus des Typs IP einhalten, und im Rahmen von Ausstattungen (1, 2), die das oder die Herkunftsnetze (3, 4) eines Pakets identifizieren können, **dadurch gekennzeichnet, dass** jedes Element (8) des Verzeichnisses von Adressen niederen Niveaus mindestens einen besonderen Wert (80) des Zieladressfelds MAC, einen besonderen Wert (81) des Zieladressfelds IP, einen Identifikator (85) des oder der Herkunftsnetze des Pakets, das mit diesen besonderen Werten (80, 81) des Zieladressfelds MAC und IP kompatibel ist, sowie ein Bestätigungsflag (86) des Identifikators (85) des oder der Herkunftsnetze des Pakets enthält.

8. Verfahren nach Anspruch 1, angewandt im Rahmen von Ethernet-Netzen mit Paketen, die ein Protokoll ersten Niveaus des Typs MAC einhalten, das unter den Dienstfeldern eines Pakets ein Feld (53) auferlegt, das die Protokolle identifiziert, die von den Paketen auf dem zweiten Niveau eingehalten werden, ein Protokoll zweiten Niveaus des Typs IP und ein Protokoll dritten Niveaus, das zu einer Protokollgruppe gehört, die die Protokolle UDP und TCP enthält, **dadurch gekennzeichnet, dass** jedes Element (9) des Verzeichnisses höherer Niveaus mindestens einen besonderen Wert (91) des UDP/TCP-Adressfelds der Zielschnittstelle und ein doppeltes Bestätigungsflag (92) des besonderen Werts (91) des UDP/TCP-Adressfelds der Zielschnittstelle enthält, das gleichzeitig ein Protokoll dritten Niveaus identifiziert, das mit dem besonderen Wert (91) des UDP/TCP-Adressfelds der Zielschnittstelle kompatibel ist.

9. Verfahren nach Anspruch 1, angewandt im Rahmen eines duplizierten Netzes, das aus zwei unabhängigen Ethernet-Netzen (3, 4) besteht, die jeweils Zugang zu der Ausstattung (1, 2) haben, wobei jedes der zwei Ethernet-Netze (3, 4) Pakete hat, die ein Protokoll ersten Niveaus des Typs MAC, ein Protokoll zweiten Niveaus des Typs IP und ein Protokoll dritten Niveaus, das zu einer Protokollgruppe gehört, die die Protokolle UDP und TCP enthält, einhalten, und im Rahmen von Ausstattungen (1, 2), die das oder die Herkunftsnetze des Pakets identifizieren können, **dadurch gekennzeichnet, dass** jedes Element (9) des Verzeichnisses höherer Niveaus mindestens einen besonderen Wert (91) des UDP/TCP-Adressfelds der Zielschnittstelle, ein doppeltes Bestätigungsflag (92) des besonderen Werts (91) des UDP/TCP-Adressfelds der Zielschnittstelle, das gleichzeitig ein Protokoll dritten Niveaus identifiziert, das mit dem besonderen Wert (91) des UDP/TCP-Adressfelds der Zielschnittstelle kompatibel ist, einen Identifikator (96) des oder der Herkunftsnetze des Pakets, die mit diesem besonderen Wert (91) des UDP/TCP-Adressfelds der Zielschnittstelle kompatibel sind, und ein Bestätigungsflag (97) des Identifikators (96) des oder der Herkunftsnetze des Pakets enthält.
